# EUROPEAN PATENT APPLICATION

(11) **EP 2 239 517 A1**
(43) Date of publication of application: **13.10.2010**
(21) Application number: 10157408.5
(22) Date of filing: 23.03.2010
(51) Int. Cl.: F24F 3/16, B05B 5/00, B60H 3/00

(54) **Air conditioner including electrostatic atomization device**

(30) Priority: 25.03.2009 JP 2009074460
(71) Applicant: Panasonic Electric Works Co., Ltd, Kadoma-shi Osaka 571-8686 (JP)
(72) Inventor: Yano, Takeshi, Osaka 571-8686 (JP); Matsumoto, Junichi, Osaka 571-8501 (JP)
(74) Representative: Sherrard-Smith, Hugh

(57) **Abstract**

An airflow passage (9) of an air conditioner (1) includes an intake port, which draws in air, and an outlet port (3), which is in communication with the intake port and emits air conditioning current. An electrostatic atomization device (6) used with the air conditioner (1) is in communication with the allow passage (9) and includes a discharge electrode (5), a water supply device (6), which supplies water to the discharge electrode, and a high voltage application device (7), which applies high voltage to the discharge electrode and generates charged micro-particle water through electrostatic atomization, The electrostatic device, (8) additionally generates ozone when generating the charged micro-particle water and emits the ozone into the airflow passage (9) with the charged micro-particle water. A controller (10) controls concentration of the ozone emitted from the outlet port (3) of the airflow passage at an appropriate concentration during operation of the air conditioner (1).

## Description

The application is based upon and claims the benefit of priority from prior Japanese Patent Application No. 2009-074460, filed on March 25, 2009, the entire contents of which are incorporated herein by reference.

The present invention relates to an air conditioner including an electrostatic atomization device that electrostatically atomizes water to generate charged micro-particle water having a nanometer size.

An electrostatic atomization device that electrostatically atomizes water to generate charged micro-particle water having a nanometer size is known in the prior art. The electrostatic atomization device includes a discharge electrode, a cooling means for cooling the discharge electrode to form condensed water on the surface of the discharge electrode and supply the discharge electrode with water, and a high voltage application device for applying high voltage to the discharge electrode. The electrostatic atomization device applies high voltage to the discharge electrode to electrostatically atomize the water supplied to the discharge electrode and generate charged micro-particle water having a nanometer size.

The charged micro-particle water having a nanometer size generated by the electrostatic atomization device contains radicals, such as OH radicals, and functions to inactivate and deodorize bacteria, virus, and the like and thereby effectively improves air quality. However, air discharge generates ozone simultaneously with the charged micro-particle water. The ozone may be unpleasant due to its smell, although there are differences between individuals. The ozone also may be harmful to human body when the ozone concentration exceeds a certain level as regulated by environmental standards or the like.

Japanese Laid-Open Patent Publication No. 2006-247478 describes the arrangement of a fan in the electrostatic atomization device. The electrostatic atomization device of the publication varies a target value for a discharge current in accordance with the rate of the air flow produced by the fan so that the concentration of the ozone emitted from the emission port of the electrostatic atomization device has an appropriate value.

The electrostatic atomization device described in the publication controls the concentration of the ozone emitted from the emission port of the electrostatic atomization device at an appropriate value so as to lessen odors and prevent adverse effects on the human body. Thus, when the electrostatic atomization device is solely used in a room and the charged micro-particle water is emitted directly into the room from the emission port of the electrostatic atomization device, the technique of the above publication is effective for preventing the ozone concentration from increasing. However, when the electrostatic atomization device is used in an air conditioner, there may be some problems.

In this case, the charged micro-particle water generated by the electrostatic atomization device is emitted into an airflow passage of the air conditioner. The flow of air in the airflow passage emits the charged micro-particle water into a room from an outlet port. Accordingly, even if the generation of ozone is controlled in the electrostatic atomization device to have an appropriate concentration at the emission port of the electrostatic atomization device, the ozone emitted into the airflow passage mixes with the air conditioning current flowing through the airflow passage. The air conditioning current flowing through the airflow passage dilutes the ozone emitted into the room from the outlet port of the airflow passage and lowers the concentration from the appropriate value.

This reduces discharge even though more discharge can be performed (ozone concentration may be further Increased in the electrostatic atomization device serving), and also reduces the generated amount of the charged micro-particle water. As a result, the emission amount of the charged micro-particle water emitted in the air flow from the outlet port of the air conditioner consequently becomes small. Thus, deodorization and sterilization effects and the like cannot be improved.

Moreover, an air conditioner varies the flow rate of air. However, when the air conditioner incorporates the electrostatic atomization device and varies the flow rate, the concentration of ozone at the outlet port of the air conditioner changes.

Under the present circumstances, it is desirable that the ozone at the outlet port of the air conditioner be adjusted to the appropriate concentration to eliminate any influence on the human body, while increasing the emission amount of the charged micro-particle water as much as possible. It is strongly desirable that these problems be solved especially when a person sits in front of the outlet port of the air conditioner for a long time In a small room such as in the passenger compartment of an automobile.

The present Invention provides an air conditioner including an electrostatic atomization device that adjusts to an appropriate value not only the concentration of ozone emitted from an outlet port of the air conditioner but also the emission amount of charged micro-particle water.

One embodiment of the present invention is an air conditioner provided with an airflow passage including an intake port, which draws in air, and an outlet port, which is in communication with the intake port and which emits air conditioning current. An electrostatic atomization device is in communication with the airflow passage and includes a discharge electrode, a water supply device, which supplies water to the discharge electrode, and a high voltage application device, which applies high voltage to the discharge electrode and generates charged micro-particle water through electrostatic atomization. The electrostatic atomization device emits ozone into the airflow passage together with the charged micro-particle water. A controller electrically connected to the electrostatic atomization device controls concentration of the ozone emitted from the outlet port of the airflow passage at an appropriate concentration during operation of the air conditioner.

A further embodiment of the present invention is an electrostatic atomization device for use with an air conditioner. The air conditioner includes an airflow passage that emits an air conditioning current. The electrostatic atomization device includes a discharge electrode. A water supply device supplies water to the discharge electrode. A high voltage application device applies high voltage to the discharge electrode and generates charged micro-particle water through electrostatic atomization. The electrostatic atomization produces ozone at the discharge electrode together with the charged micro-particle water. An emission tube emits the ozone into the airflow passage together with the charged micro-particle water. A controller controls concentration of the ozone emitted from the outlet port of the airflow passage at an appropriate concentration during operation of the air conditioner.

Other embodiments and advantages of the present invention will become apparent from the following description, taken in conjunction with the accompanying drawings, illustrating by way of example the principles of the invention.

The present invention is illustrated by way of example and is not limited by the accompanying figures, in which like references indicate similar elements. Elements in the figures are illustrated for simplicity and clarity and have not necessarily been drawn to scale. In the drawings, like numerals are used for like elements throughout.
Fig. 1 is a schematic diagram showing an air conditioner including an electrostatic atomization device according to one embodiment of the present invention;
Fig.2 Is a schematic cross-sectional view showing the electrostatic atomization device of Fig. 1;
Fig. 3 is a graph showing the relationship of the air flow rate of the air conditioner shown in Fig. 1 and the ozone concentration at the outlet port of the air conditioner;
Fig. 4 is a graph showing the relationship of the discharge current value and the ozone amount in the electrostatic atomization device shown in Fig. 1;
Fig. 5 is a schematic diagram showing an air conditioner including an electrostatic atomization device according to another embodiment of the present invention;
Fig. 6 is a graph showing the relationship of the air flow rate of the air conditioner shown in Fig. 5 and the discharge current value of the electrostatic atomization device; and
Fig. 7 is a schematic diagram showing an air conditioner including an electrostatic atomization device according to a further embodiment of the present invention.

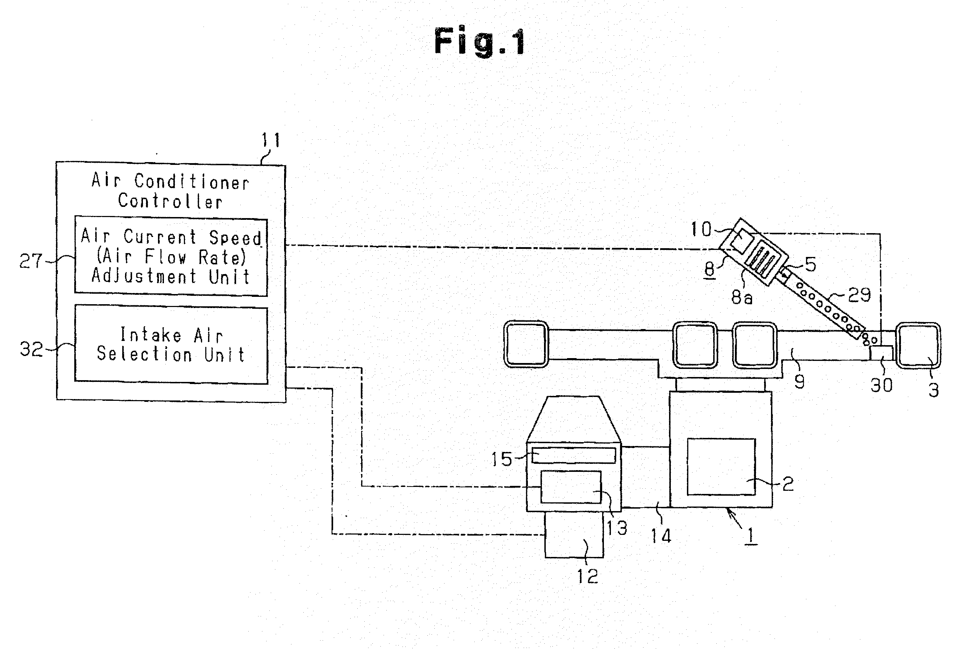

The present invention will now be discussed with reference to the accompanying drawings. An air conditioner 1 according to the present invention includes an electrostatic atomization device 8. Fig. 1 shows one embodiment of the air conditioner 1 including the electrostatic atomization device 8. In the embodiment shown in Fig. 1, the air conditioner 1 that includes the electrostatic atomization device 8 is arranged used as an air conditioner installed in an automobile.

An airflow passage 9 has an upstream side including an intake port 12 and a downstream side including outlet ports 3. In the embodiment shown in Fig. 1, for use in an automobile, the downstream side of the airflow passage 9 is branched and includes a plurality of the outlet ports 3.

The airflow passage 9 includes a blower unit 13, a filter 14, and a heat exchanger 2, which are arranged in this order from the upstream side to the downstream side. The blower unit 13 may be a blower motor. The heat exchanger 2 may be an evaporator. The air conditioner 1 air conditions a room by driving the blower unit 13 to draw air through the intake port 12 into the airflow passage 9, adjusting the air to a target temperature with the heat exchanger 2, and emitting the air from the outlet port 3 into the room.

The air conditioner 1 Is controlled by an air conditioner controller 11. The air conditioner controller 11 includes an ON/OFF switch (not shown), an air current speed (air flow rate) adjustment unit 27, and a temperature adjustment unit (not shown). The air conditioner controller 11 adjusts the air current speed (air flow rate) by operating the air current speed adjustment unit 27. For example, the air current speed adjustment unit 27 adjusts the air current speed (air flow rate) of the air conditioning current emitted from the outlet port 3 into the room by changing the operational speed of the blower unit 13.

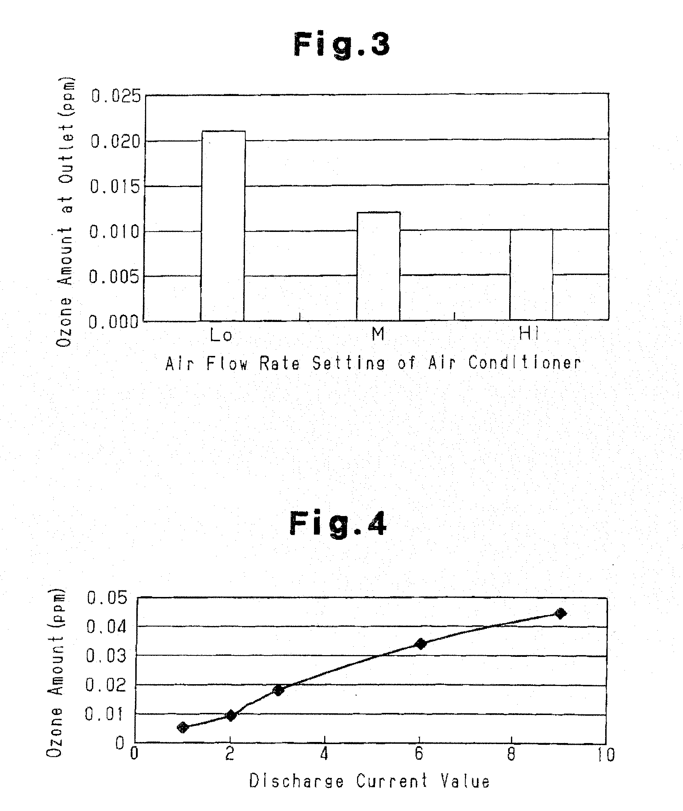

The electrostatic atomization device 8 arranged In the air conditioner 1 includes a discharge electrode 5, a water supply device 6 (not shown in Fig. 4), and a high voltage application device 7. The water supply device 6 supplies the discharge electrode 5 with water by cooling the discharge electrode 5 and forming condensed water on the discharge electrode 5 from the moisture in air. The high voltage application device 7 applies high voltage to the water on the discharge electrode 5.

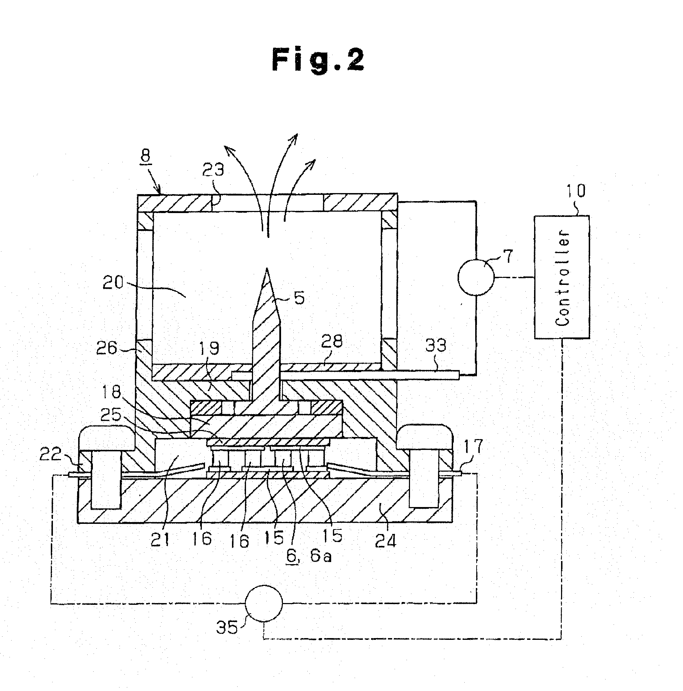

Fig. 2 schematically shows the electrostatic atomization device 8. In the embodiment shown in Fig. 2, the water supply device 6 for cooling the discharge electrode 5 includes, for example, a Peltier unit 6a.

The Peltier unit 6a includes two Peltier circuit plates 15 and a plurality of thermoelectric elements 16 arranged between the Peltier circuit plates 15. Each Peltier circuit plate 15 includes an insulative plate and a circuit unit. The insulative plate is formed from alumina or aluminum nitride and has high thermal conductivity. The circuit unit is arranged on one side of the insulative plate. The thermoelectric elements 16 are held between the circuit units facing toward each other on the Peltier circuit plates 15. Each circuit unit electrically connects adjacent ones of the thermoelectric elements 16. In the Peltier unit 6a, heat is conveyed from one Peltier circuit plate 15 to the other Peltier circuit plate 15 as current flows from a power supply device 35 to the thermoelectric elements 16 through a Peltier input lead wire 17.

In the embodiment of Fig. 2, the Peltier circuit plate 15 on one side (upper side in Fig. 2) of the Peltier unit 6a serves as a cooling side. A cooling insulative plate 1 is coupled to an outer side of the cooling Peltier circuit plate 15. The cooling insulative plate 18 has high thermal conductivity and high voltage withstand characteristics and is formed from alumina, aluminum nitride, or the like, The insulative plate of the cooling Peltier circuit plate 15 and the cooling insulative plate 18 form a cooling unit 25. The Peltier circuit plate 15 on the other side (lower side In Fig. 2) of the Peltier unit 6a serves as a heat radiation side. A heat radiation unit 24, which has high thermal conductivity and is formed from metal such as aluminum, is coupled to an outer side of the heat radiation side Peltier circuit plate 15.

A housing 26 is formed from an insulative material such as polybutylene terephthalate (PBT) resin, polycarbonate, and polyphenylene sulfide (PPS) resin. The housing 26 includes a tubular wall having openings (right side and left side In Fig. 2). Further, the housing 26 includes an intermediate portion in which a partition 19 partitions the housing 26 into an accommodation chamber 21 and a discharge chamber 20. The accommodation chamber 21 has an open rear side (lower side as viewed in Fig. 2), and a flange 22, which is coupled to the heat radiation unit 24, extends from the entire circumference of the open rear end. The discharge chamber 20 has an open front side (upper side as viewed in Fig. 2). A ring-shaped opposing electrode 23 is arranged on the open front end.

The Peltier unit 6a is coupled to and accommodated in the housing 26 with the heat radiation unit 24 located outside the housing 26. The peripheral portion of the heat radiation unit 24 is fixed to the flange 22 and coupled to the housing 26 so as to seal the accommodation chamber 21.

The discharge electrode 5 is fitted into a hole formed in the partition 19 when coupling the Peltier unit 6a to the housing 26. The discharge electrode 5 includes a front end, which is arranged in the discharge chamber 20, and a rear end, which has a large diameter and is arranged in the accommodation chamber 21. The discharge electrode 5 is coupled to the housing 26 by holding the rear large diameter end of the discharge electrode 5 between the partition 19 of the housing 26 and the cooling unit 25 of the Peltier unit 6a.

The discharge electrode 5, which is coupled to the cooling unit 25 of the Peltier unit 6a, is substantially rod-shaped and formed from a material having high thermal conductivity and electrical conductivity. The Peltier unit 6a produces condensed water when cooled by the Peltier unit 6a. The center of the ring-shaped opposing electrode 23 lies along a line extended from the front end of the discharge electrode 5.

The discharge electrode 5 is connected to a high voltage application plate 28. The high voltage application plate 28 is connected to the high voltage application device 7 by a high voltage lead wire 33 so as to apply high voltage to the discharge electrode 5. In the embodiment shown in Fig. 2, the opposing electrode 23 is also connected to the high voltage application device 7 so that high voltage from the high voltage application device 7 is applied between the discharge electrode 5 and the opposing electrode 23.

A controller 10 arranged in the electrostatic atomization device 8 controls the flow of current from the power supply device 35 to the Peltier unit 6a. The controller 10 also controls the application of high voltage from the high voltage application device 7 to the discharge electrode 5.

In the electrostatic atomization device 8, heat is conveyed in the same direction (upper side to lower side as viewed in Fig. 2) in each thermoelectric element 16 when current flows to the thermoelectric elements 16. This cools the cooling unit 25 of the Peltier unit 6a. When the cooling unit 25 is cooled, the discharge electrode 5 coupled to the cooling unit 25 is cooled. This cools the air surrounding the discharge electrode 5. As a result, the moisture in air is condensed and condensed water forms on the front end of the discharge electrode 5.

When the discharge electrode 5 is cool and condensed water is formed on the front end of the discharge electrode 5, the high voltage application device 7 applies high voltage to the water on the front end of the discharge electrode 5. In this case, the high voltage is applied between the discharge electrode 5 and the opposing electrode so that the front end of the discharge electrode 5 becomes a negative electrode and charge is concentrated at the front end. This charges the water on the front end of the discharge electrode 5, and Coulomb force acts on the charged water so as to locally raise the surface level of the water and form a conical shape (tailor cone). As a result, the concentration of charge at the distal end of the conical water increases the charge density at the distal end. The repulsive force of the high density charge fragments and scatters (Rayleigh fission) the water. Electrostatic atomization is performed in this manner to generate charged micro-particle water (negative ion mist) having a nanometer size and including radicals. This emits charged micro-particle water from a central hole in the opposing electrode 23, which is arranged on the open end of the discharge chamber 20.

In the above-described embodiment, the Peltier unit 6a is described as one example of a water supply device 6 for supplying water to the discharge electrode 5 by cooling the discharge electrode 5 and forming condensed water from the moisture in air on the discharge electrode 5. However, the water supply device 6 is not limited in such a manner. For example, the water supply device 6 may be formed by the cooling unit of various types of known heat exchanging means.

As shown In Fig. 1, the electrostatic atomization device 8 is accommodated In a casing 8a, which forms the outer contour of the electrostatic atomization device 8. The casing 8a is coupled to an emission tube 29, which is in communication with the central hole of the opposing electrode 23. The emission tube 29 has an open distal end serving as an emission port of the electrostatic atomization device 8 for charged micro-particle water.

The electrostatic atomization device 8 is arranged outside the airflow passage 9 of the air conditioner 1. The distal portion of the emission tube 29 is in communication with the airflow passage 9 of the air conditioner 1.

The electrostatic atomization device 8 is set to be activated in cooperation with the ON/OFF switch (not shown) of the air conditioner controller 11. Accordingly, when the air conditioner controller 11 is activated, charged micro-particle water having a nanometer size is generated In the electrostatic atomization device 8 and emitted from the emission port at the distal end of the emission tube 29 into the airflow passage 9. The micro-particle water mixes and flows with the air conditioning current flowing through the airflow passage 9.

The portion at which the charged micro-particle water Is emitted into the airflow passage 9 (portion that is in communication with the distal end of the emission tube 29) is preferably located downstream to the heat exchanger 2 in the airflow passage 9 and slightly before the outlet port 3 of the airflow passage 9. For example, this portion is preferably located about 10 to 50 cm before the outlet port 3. The emission tube 29 is arranged only near the rightmost outlet port 3 in Fig. 1. However, the emission tube 29 is preferably arranged near the other outlet ports 3 in the same manner.

Air conditioning current emitted from the outlet port 3 of the airflow passage 9 into a room (here, a passenger compartment) air conditions the room. In this case, the charged micro-particle water containing radicals (super oxide and hydroxyl radical) is emitted into the room together with the air conditioning current. The radical has a deodorizing effect, a sterilization effect, an allergen inactivation effect, an agrochemical decomposition effect, and the like. Accordingly, the charged micro-particle water deodorizes, sterilizes, inactivates allergens, and decomposes agrochemicals in the room.

The radicals are contained In extremely small charged micro-particle water having a nanometer size. The charged micro-particle water having a nanometer is thus suspended in the air and carried to every corner of the room for over a long period of time thereby exhibiting a deodorizing effect, a sterilization effect, an allergen inactivation effect, an agrochemical decomposition effect, and the like. Further, the charged micro-particle water having a nanometer enters clothes of a person and the seats In the room, particularly, a person In the passenger compartment of an automobile. This exhibits deodorizing effect, a sterilization effect, an allergen inactivation effect, an agrochemical decomposition effect, and the like on the clothes and seats.

When the charged micro-particle water is generated in the electrostatic atomization device 8, ozone is additionally generated at the discharge electrode 5 at the same time. Accordingly, the ozone is simultaneously emitted from the outlet port 3 of the airflow passage 9 into the room with the air conditioning current when the charged micro-particle water generated in the electrostatic atomization device is emitted from the outlet port 3.

The amount of the charged micro-particle water generated by the electrostatic atomization device 8, that is, the generated amount of radicals is proportional to the amount of current flowing between the discharge electrode 5 and the opposing electrode 23, that is, the discharge current value. In this case, the discharge simultaneously generates ozone, the amount of which is proportional to the discharge current value as shown in Fig. 4. Accordingly, the ozone is also emitted into the airflow passage 9 with the charged micro-particle water and then emitted from the outlet port 3 into the room with the air conditioning current. When a large amount of ozone is emitted from the outlet port 3 into the room, the ozone may cause an unpleasant odor.

To resolve this problem, in the present invention, the controller 10 controls the ozone emitted from the outlet port 3 into the room during the operation of the air conditioner 1 to have an appropriate concentration.

The appropriate concentration of the ozone is the maximum concentration that satisfies certain conditions, which are no unpleasant ozone odor and no adverse effect on the human body, or a concentration that is as close as possible to such maximum concentration.

One example for controlling the ozone concentration emitted from the outlet port 3 of the air conditioner 1 into the room at an appropriate concentration will now be discussed.

Fig. 3 is a graph showing the relationship of the ozone concentration and the air flow rate emitted from the outlet port 3. As apparent from the graph, the ozone concentration decreases when the air flow rate of the air conditioning current flowing through the outlet port 3 increases. Accordingly, in the present example, the controller 10 controls the discharge current value In relation with the air flow rate of the air conditioning current flowing through the outlet port 3 to adjust the ozone concentration emitted from the outlet port 3 to an appropriate concentration.

There are several known ways to obtain the air flow rate at the outlet port 3, one of which is to arrange an airflow meter 30 in the airflow passage 9, as shown in Fig. 1, and measure the air current speed in the airflow passage 9 with the airflow meter 30. In this case, the controller 10 determines the air flow rate of the outlet port 3 based on the air current speed information measured by the airflow meter 30. Then, the controller 10 adjusts the ozone concentration in accordance with changes in the air flow rate (air current speed). For example, when the air current speed is low (i.e., when the air flow rate is low), the concentration of the ozone emitted from the outlet port 3 is high. The controller 10 thus lowers the discharge current value to control the ozone in the outlet port 3 at an appropriate concentration. When the air current speed is high (i.e., when the air flow rate is high), the concentration of the ozone emitted from the outlet port 3 is low. The controller 10 thus raises the discharge current value to control the ozone to have the appropriate concentration. This maintains the ozone emitted from the outlet port 3 at the appropriate concentration even when the air current speed changes. Moreover, the generated amount of charged micro-particle water is also maintained at the optimum value for the air current speed (maximum generated amount of charged micro-particle water when maintaining the ozone concentration at the appropriate concentration).

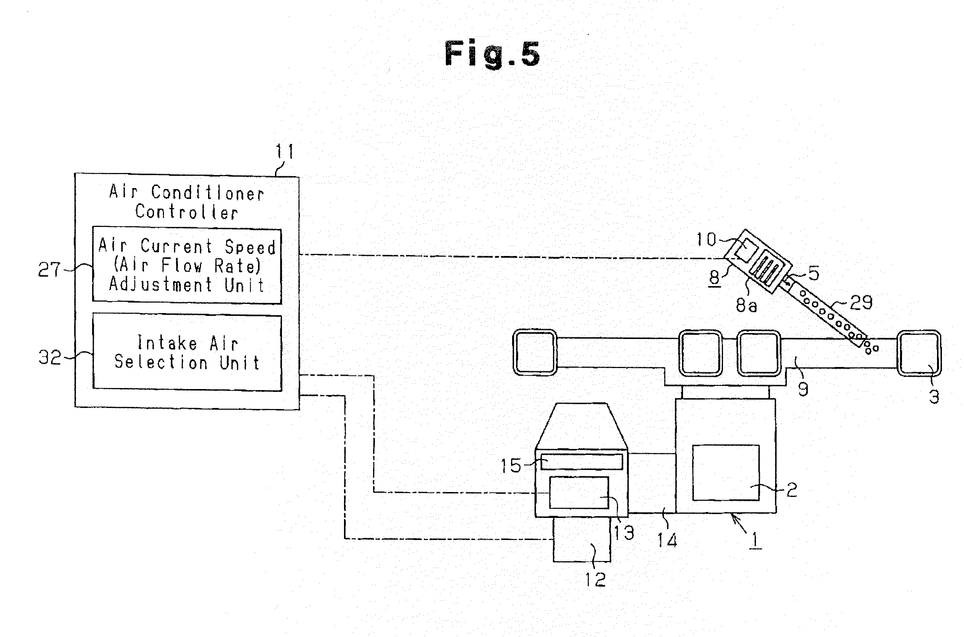

Another example for controlling the ozone concentration emitted from the outlet port 3 of the air conditioner 1 into the room at an appropriate concentration will now be discussed with reference to Fig. 5. The air conditioner 1 of Fig. 5 controls the discharge current value in accordance with adjustment of the air current speed (air flow rate) in the air conditioner 1.

The air current speed adjustment unit 27 arranged in the air conditioner controller 11 adjusts the air current speed (air flow rate). The air current speed (air flow rate) in the air conditioner 1 may be switched by operating the air current speed adjustment unit 27 (e.g., by selectively switching to one of "low (Lo)", "middle (M)", or "high (Hi)"). The controller 10 of the electrostatic atomization device 8 sets the discharge current value corresponding to the air current speed (air flow rate) in the air conditioner 1 in response to a switch signal from the air current speed adjustment unit 27. This maintains the ozone emitted from the outlet port 3 at an appropriate concentration.

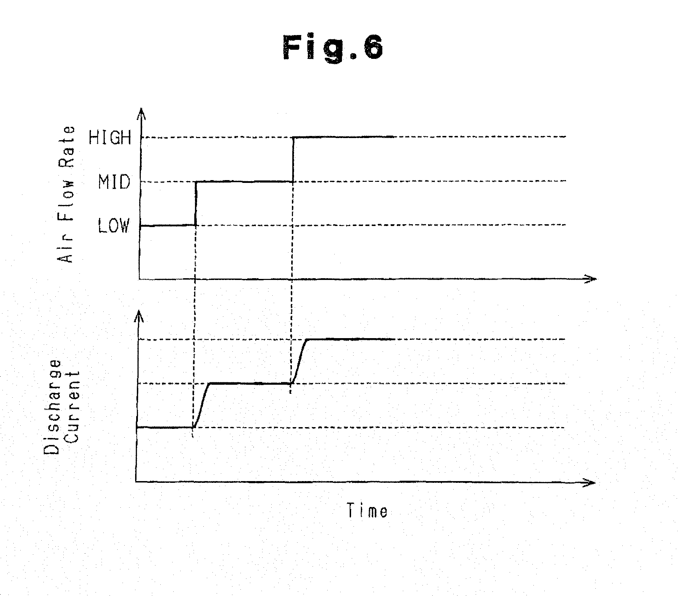

Fig. 6 shows the relationship between the air current speed (air flow rate) of the air current speed adjustment unit 27 and the discharge current value of the electrostatic atomization device 8. When a low air current speed (low air flow rate) is set by the air current speed adjustment unit 27, the controller 10 lowers the discharge current value to decrease the generated amount of the charged micro-particle water, that is, the ozone amount. When a high air current speed (high air flow rate) is set by the air current speed adjustment unit 27, the controller 10 raises the discharge current value to increase the generated amount of the charged micro-particle water, that is, the ozone amount.

This constantly maintains the ozone emitted from the outlet port 3 at the appropriate concentration regardless of the switching state of the air current speed adjustment unit 27. Further, the charged micro-particle water is maintained at the optimum generated amount for the switching state of the air current speed adjustment unit 27 (maximum generated amount of the charged micro-particle water when maintaining the ozone concentration at the appropriate concentration).

When installing the air conditioner 1 in an automobile, the intake port 12 for the airflow passage 9 of the air conditioner 1 is switchable between indoor air intake and outdoor air intake. The switching between indoor air intake and outdoor air intake is performed by operating an intake air selection unit 32 arranged in the air conditioner controller 11.

Since the charged micro-particle water emitted from the outlet port 3 of the air conditioner 1 into the room is small and has a nanometer size, the charged micro-particle water drifts in the room for a long period of time. The ozone emitted from the outlet port 3 immediately becomes oxygen in the room, Since the room (passenger compartment) is sealed, the ozone concentration in the room, except for the vicinity of the outlet port 3, becomes less than or equal to 0.01 ppm. Accordingly, when the air conditioner 1 is drawing in indoor air through the intake port 12 and emitting an air conditioning current from the outlet port 3 into the room to perform an indoor air circulation operation, the ozone concentration in the room, except for the vicinity of the outlet port 3, becomes less than or equal to 0.01 ppm.

When drawing in outdoor air, the ozone concentration differs depending on the environment. For example, In a forest or an environment in which the ultraviolet light is strong, the ozone concentration of the outdoor air is between 0,01 ppm and 0.031 ppm. Accordingly, when the air conditioner 1 is drawing in outdoor air through the intake port 12 and emitting air conditioning current from the outlet port 3 into the room to perform an outdoor air intake operation, the ozone concentration in the room, except for the vicinity of the outset port 3, becomes 0.01 ppm to 0.031 ppm.

Accordingly, in the embodiment described above, when changing the discharge current value in accordance with a change in the air current speed (air flow rate), the controller 10 may further control the discharge current value in accordance with the switching signal of the intake air selection unit 32. In this case, the controller 10 may change the discharge current value for the same air current speed (same air flow rate) in accordance with the indoor air intake operation and the outdoor air intake operation.

For example, when performing an operation for drawing in outdoor air, the controller 10 controls a discharge current reference value for the air current speed (air flow rate), that is, the discharge current value for the same air current speed (air flow rate), to be lower than when performing an operation for drawing in indoor air.

Thus, the concentration of the ozone emitted from the outlet port 3 into the room and the generated amount of the charged micro-particles are adjusted to appropriate values regardless of changes in the air current speed (air flow rate) when the air conditioner 1 is performing the indoor air intake operation and the outdoor air intake operation.

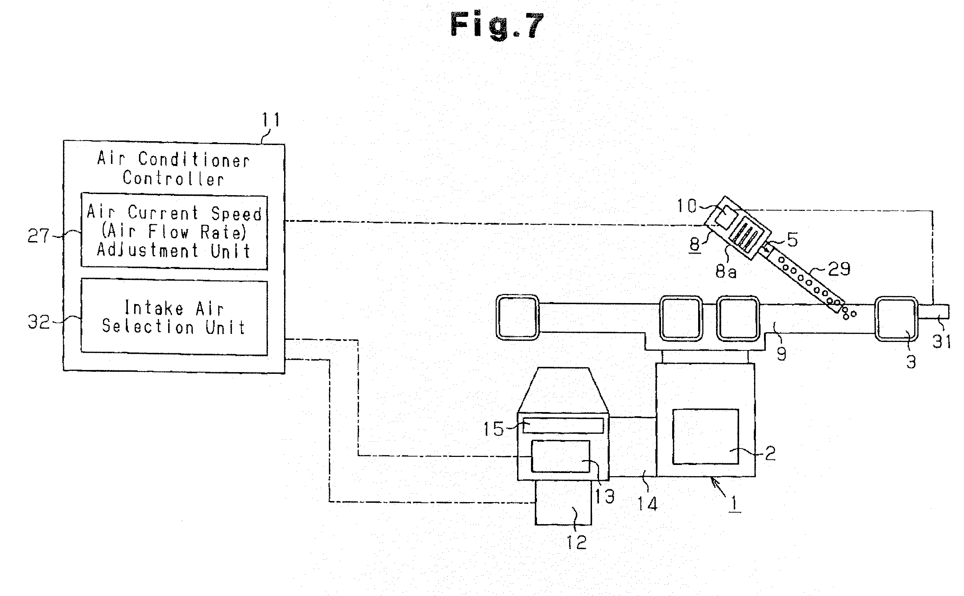

Fig. 7 shows a further embodiment of the present invention. In the embodiment of Fig. 7, an ozone concentration sensor 31 is arranged at the outlet port 3 of the air conditioner 1, and the concentration of the ozone emitted from the outlet port 3 is detected with the ozone concentration sensor 31. In this case, the controller 70 controls the discharge current value of the electrostatic atomization device 8 based on the ozone concentration detection signal.

In the embodiment of Fig. 7, regardless of changes in the air current speed (air flow rate) of the air flowing through the airflow passage 9 or the switching between outdoor air Intake and indoor air intake, the ozone sent out from the outlet port 3 together with the charged micro-particle water is maintained at the appropriate concentration, while the generated amount of the charged micro-particles is controlled to be appropriate amount.

In any of the embodiments described above, the ozone emitted from the outlet port 3 of the air conditioner 1 is maintained at an appropriate concentration of less than or equal to a predetermined value. Thus, adverse effects such as ozone odor in the room may be eliminated. Further, the generated amount of the charged micro-particle water is controlled to be optimum (maximum generated amount of the charged micro-particle water when maintaining the ozone concentration at the appropriate concentration) in accordance with the system state of the air conditioner 1 (air flow rate, switching of intake air, and the like). Thus, a deodorizing effect, a sterilization effect, an allergen inactivation effect, and the like are exhibited to a maximum extent in the room.

The air conditioner 1 including the electrostatic atomization device 8 according to the present invention has the advantages described below.

The electrostatic atomization device 8, which is in communication with the airflow passage 9 of the air conditioner 1, includes the discharge electrode 5, the water supply device 6 for supplying water to the discharge electrode 5, and the high voltage application device 7 for applying high voltage to the discharge electrode 5 and generating the charged micro-particle water through electrostatic atomization. The electrostatic atomization device 8 additionally generates ozone when generating the charged micro-particle water, and emits the ozone Into the airflow passage 9 together with the charged micro-particle water. The controller 10, which is electrically connected to the electrostatic atomization device 6, controls the ozone emitted from the outlet port 3 of the airflow passage 9 during the operation of the air conditioner 1 to have the appropriate concentration.

In this structure, the charged micro-particle water generated in the electrostatic atomization device 8 is emitted from the outlet port 3 into the room by the air conditioning current flowing through the airflow passage 9. Accordingly when the room is air conditioned, the room is also deodorized and sterilized, and allergens are inactivated. Further, the concentration of the ozone emitted from the outlet port 3 into the room is adjusted to the appropriate concentration. This avoids the generation of ozone odor and prevents adverse effect of the ozone on the human body. In addition, the generated amount of the charged micro-particle water is optimized by adjusting the ozone at the outlet port 3 to the appropriate concentration. This increases the emission amount of the charged micro-particle water emitted from the outlet port 3 when the ozone concentration in the room is low to enhance the deodorization effect, sterilization effect, and the like of the charged micro-particle water in the room.

The controller 10 preferably controls the discharge current value for the discharge electrode 5 in accordance with the air flow rate of the air conditioning current from the outlet port 3. In this structure, the concentration of the ozone emitted from the outlet port 3 into the room and the generated amount of the charged micro-particle water are adjusted to appropriate values that are in accordance with the air flow rate of the air conditioning current.

The air conditioner 1 preferably includes the airflow meter 30, which is arranged near the outlet port 3 of the airflow passage 9 to measure the air current speed of the air conditioning current, and the controller 10 changes the discharge current value based on the air current speed information obtained from the airflow meter 30. In this case, the controller 10 increases the discharge current value in a range in which the ozone concentration at the outlet port does not exceed the appropriate concentration as the air flow rate of the air conditioning current increases. This adjusts the concentration of the ozone emitted from the outlet port 3 into the room and the generated amount of the charged micro-particle water to appropriate values.

The electrostatic atomization device 8 preferably includes the emission tube 29, which has the emission port for emitting ozone together with charged micro-particle water. The emission port of the emission tube 29 is arranged near the outlet port 3 of the airflow passage 9. The emission port of the emission tube 29 is preferably arranged between the heat exchanger 2 and the outlet port 3 in the airflow passage 9. In this structure, the ozone concentration at the outlet port 3 is accurately maintained at the appropriate value.

The controller 10 preferably controls the discharge current value for the discharge electrode 5 in accordance with the air current speed of the air conditioning current flowing through the airflow passage 9. The air flow rate of the air conditioning current sent out from the outlet port 3 changes in accordance with the air current speed of the air conditioning current. Accordingly, the discharge current value is controlled in accordance with the air current speed of the air conditioning current. This adjusts the concentration of the ozone emitted from the outlet port 3 into the room and the generated amount of the charged micro-particles to the appropriate values.

The controller 10 preferably controls the discharge current value for the discharge electrode 5 in accordance with the air current speed adjustment of the air conditioning current in the air conditioner 1. In this structure, the concentration of the ozone emitted from the outlet port 3 into the room and the generated amount of the charged micro-particles are adjusted to the appropriate values in accordance with the air current speed adjustment of the air conditioning current. In this case, the air conditioner 1 preferably includes the air current speed adjustment unit 27, which switches the air current speed level of the air conditioning current in a stepped manner, and the controller 10 switches the discharge current value in accordance with the air current speed level.

The air conditioner 1 preferably draws in indoor air and outdoor air in a selective manner from the intake port 32 of the airflow passage 9, and the controller 10 controls the discharge current value for the discharge electrode 5 in accordance with whether the indoor air is drawn in or the outdoor air is drawn in. The concentration of the ozone in the air drawn into the intake port 12, that is, the concentration of the ozone emitted from the outlet port 3 into the room differs in accordance with the air drawn into the intake port 12. Thus, the concentration of the ozone at the outlet port 3 and the generated amount of the charged micro-particle are adjusted to the appropriate values In accordance with the operation state of the air conditioner 1 by controlling the discharge current value in accordance with whether indoor air is drawn in or outdoor air is drawn in.

The controller 10 preferably controls the discharge current value for the discharge electrode 5 in accordance with the ozone concentration at the outlet port 3. In this structure, the generated amount of the charged micro-particle is adjusted to the appropriate value while the ozone concentration at the outlet port 3 is adjusted to the appropriate value. In this case, the ozone concentration sensor 31 is preferably arranged near the outlet port 3 of the airflow passage 9, and the controller 10 controls the discharge current value based on the ozone concentration detection signal from the ozone concentration sensor 31.

The controller 10 preferably controls the discharge current value by changing the value of the high voltage applied to the discharge electrode 5. In this structure, the ozone concentration and the generated amount of the charged micro-particle water are adjusted to the appropriate values through a simple control.

The controller 10 preferably controls the discharge current value by changing the time during which high voltage is applied to the discharge electrode 5. In this structure, the ozone concentration and the generated amount of the charged micro-particle water are adjusted to the appropriate values with a simple control.

It should be apparent to those skilled in the art that the present invention may be embodied In many other specific forms without departing from the spirit or scope of the invention. Particularly, it should be understood that the present invention may be embodied in the following forms.

In each of the embodiments described above, the controller 10 is installed in the electrostatic atomization device 8 but may be installed in the air conditioner controller 11 instead. Alternatively, the air conditioner controller 11 may function as the controller 10.

In each of the embodiments described above, the electrostatic atomization device 8 is not limited to the structure shown in Fig. 2. The air conditioner of the present invention is applicable to the structure of any type of electrostatic atomization device that can additionally generate ozone when generating the charged micro-particle water.

In any of the embodiments described above, a measurement means for measuring the discharge current value may be used. In such a case, the controller 10 may accurately maintain the ozone concentration at the appropriate value by changing the value of the high voltage applied to the discharge electrode 5 so that the discharge current value measured by the measurement means becomes equal to the target discharge current value.

Obviously, the discharge current value may be controlled not only by changing the value of the applied high voltage but also by changing the time during which the high voltage is applied. When applying high voltage using a pulse width modulator (PWM), the controller 10 may control the discharge current value by changing the time during which the high voltage is applied through PWM control.

Alternatively, the controller 10 may just change the discharge current value in a stepped manner in accordance with a change of the air current speed (air flow rate) or switching between outdoor air and indoor air without using the measurement means for measuring the discharge current value.

In each of the embodiments described above, the electrostatic atomization device 8 is activated in cooperation with the ON/OFF switch of the air conditioner controller 11 of the air conditioner 1. However, the air conditioner controller 1 may include an ON/OFF switch used exclusively for the electrostatic atomization device 8. In other words, the activation of the air conditioner 1 and the activation of the electrostatic atomization device 8 may be performed separately. In such a case, only the air conditioning current, only the charged micro-particle water, or the air conditioning current including the charged micro-particle water may be emitted from the outlet port 3.

In each of the embodiments described above, the air conditioner 1, which includes the electrostatic atomization device 8, is installed in a vehicle such as an automobile. However, the air conditioner 1 may be installed in a building to air condition the rooms of the building.

The present examples and embodiments are to be considered as illustrative and not restrictive, and the invention is not to be limited to the details given herein, but may be modified within the scope and equivalence of the appended claims.

## Claims

1. An air conditioner (1) **characterized by**:
an airflow passage (9) including an intake port (12), which draws in air, and an outlet port (3), which is in communication with the intake port and which emits air conditioning current;
an electrostatic atomization device (8) in communication with the airflow passage and including a discharge electrode (5), a water supply device (6), which supplies water to the discharge electrode, and a high voltage application device (7), which applies high voltage to the discharge electrode to generate charged micro-particle water through electrostatic atomization, with the electrostatic atomization device emitting ozone into the airflow passage (9) together with the charged micro-particle water; and
a controller (10) that is electrically connected to the electrostatic atomization device (8) and controls concentration of the ozone emitted from the outlet port (3) of the airflow passage (9) at an appropriate concentration during operation of the air conditioner (1).

2. The air conditioner (1) according to claim 1, **characterized in that** the controller (10) is configured to control a discharge current value for the discharge electrode (5) in accordance to an air flow rate of the air conditioning current from the outlet port (3).

3. The air conditioner (1) according to claim 2, **characterized in that** the controller (10) is configured to control the discharge current value by changing a value of the high voltage applied to the discharge electrode (5).

4. The air conditioner (1) according to claim 2, **characterized in that** the controller (10) is configured to control the discharge current value by changing the time during which the high voltage is applied to the discharge electrode (5).

5. The air conditioner (1) according to claim 1, further **characterized by**:
an airflow meter (30) arranged near the outlet port (3) of the airflow passage (9) to measure an air current speed of the air conditioning current, wherein the controller (10) is configured to change the discharge current value based on air current speed information obtained from the airflow meter (30).

6. The air conditioner (1) according to claim 9, **characterized in that** the controller (10) is configured to increase the discharge current value within a range in which the ozone concentration at the outlet port (3) does not exceed the appropriate concentration as an air flow rate of the air conditioning current increases.

7. The air conditioner (1) according to claim 1, **characterized in that** the electrostatic atomization device (8) includes an emission tube (29) having an emission port, which emits the ozone together with the charged micro-particle water, with the emission port of the emission tube (29) being arranged near the outlet port (3) of the airflow passage.

8. The air conditioner (1) according to claim 1, further **characterized by**:
a heat exchanger (2) arranged between the intake port (12) and the outlet port (3) of the airflow passage, wherein the electrostatic atomization device (8) emits the ozone together with the charged micro-particle water into the airflow passage (9) between the heat exchanger (2) and the outlet port (3).

9. The air conditioner (1) according to claim 1, **characterized in that** the controller (10) is configured to control a discharge current value for the discharge electrode (5) in accordance with an air current speed of the air conditioning current flowing through the airflow passage (9).

10. The air conditioner (1) according to claim 1, **characterized in that** the controller (10) is configured to control a discharge current value for the discharge electrode (5) in accordance with air current speed adjustment of the air conditioning current in the air conditioner.

11. The air conditioner (1) according to claim 10, further **characterized by**
an air current speed adjustment unit (27) that allows for switching of air current speed level for the air conditioning current In a stepped manner, wherein the controller (10) switches the discharge current value in a stepped manner in accordance with the air current speed level.

12. The air conditioner (1) according to claim 1, characterize in that the air conditioner (1) selectively draws in indoor air and outdoor air through the intake port (12) of the airflow passage (9), and the controller (10) controls a discharge current value for the discharge electrode (5) in accordance with whether the indoor air is drawn in or the outdoor air is drawn in

13. The air conditioner (1) according to claim 1, **characterized in that** the controller (10) is configured to control a discharge current value for the discharge electrode (5) in accordance with the ozone concentration at the outlet port (3).

14. The air conditioner (1) according to claim 13, further **characterized by**:
an ozone concentration sensor (31) arranged near the outlet port (3) of the airflow passage, wherein the controller (10) controls the discharge current value based on an ozone concentration detection signal from the ozone concentration sensor (31).

15. An electrostatic atomization device (8) for use with an air conditioner (1), the air conditioner including an airflow passage (9) that emits an air conditioning current, the electrostatic atomization device (8) **characterized by**:
a discharge electrode (5);
a water supply device (6) that supplies water to the discharge electrode;
a high voltage application device (7) that applies high voltage to the discharge electrode to generate charged micro-particle water through electrostatic atomization, in which the electrostatic atomization produces ozone at the discharge electrode (5) together with the charged micro-particle water;
an emission tube (29) that emits the ozone Into the airflow passage (9) together with the charged micro-particle water, and
a controller (10) that controls concentration of the ozone emitted from the outlet port (3) of the airflow passage at an appropriate concentration during operation of the air conditioner (1).
